# EUROPEAN PATENT APPLICATION

(11) **EP 2 549 154 A1**
(43) Date of publication of application: **23.01.2013**
(21) Application number: 11189479.6
(22) Date of filing: 17.11.2011
(51) Int. Cl.: F16J 15/12, B60J 10/00, B29C 47/02

(54) **Sealing gasket construction**

(30) Priority: 22.07.2011 IT MI20111366
(71) Applicant: Gitta Gima di de Bonis Gerardo, 20081 Abbiategrasso (MI) (IT)
(72) Inventor: De Bonis Sciarrafia, Gerardo, I-20081 Abbiategrasso (MI) (IT)
(74) Representative: Cicogna, Franco

(57) **Abstract**

A sealing gasket construction comprises a profiled body of a composite material co-extruded with a wire core. According to a practical embodiment, the sealing gasket construction comprises a composite magnetic profiled element, co-extruded with a metal wire core constituted by a plurality of thin braided strands, each strand having a diameter from 0.1 mm to 1.0 mm.

## Description

### BACKGROUND OF THE INVENTION

The present invention relates to a sealing gasket construction.

As known, sealing gaskets are extensively used in industrial applications for insulating, for example, a space/environment from several agents, such as gases, powders, heat, noise and so on.

Said sealing gaskets are to that end made of different materials having suitable structural characteristics.

A very important parameter or feature of said sealing gaskets is their time dimensional stability.

In several applications it is very important to combine different characteristics, such as, for example, thermal insulation and/or magnetic characteristics, with the size stability feature.

In fact, if the sealing gasket size changes in the time with changes of environmental factors such as temperature, moisture and so on, their main sealing function is negatively affected.

From laboratory measurements performed on prior art sealing gasket samples for use in magnetic closure assemblies, it has been found that the linear shrinkage, in a normal shop or outer environment, for time periods up to one year, may arrive at a value of 10 mm, for 2000 mm starting values.

On the other hand, by an accelerating ageing treatment, with temperature cycles up to 55°C for several days, the shrinkage achieves and exceeds a value of 70 mm for the starting 2000 mm.

The above phenomenon negatively affects the sealing properties of prior gaskets, thereby preventing the latter from being used in high quality special applications.

### SUMMARY OF THE INVENTION

Accordingly, the aim of the present invention is to provide such a sealing gasket construction having a dimensional shrinkage much less than that of prior sealing gaskets together with a very high strength or resistance against mechanical stresses.

Within the scope of the above mentioned aim, a main object of the invention is to provide such a sealing gasket construction providing a sealing duration much longer than that of prior sealing gaskets.

Another object of the present invention is to provide such a sealing gasket construction also having improved functional characteristics such as thermal insulation, magnetic and dimensional size stability features.

Yet another object of the present invention is to provide such a sealing gasket construction which may be easily made starting from easily available elements and materials and which, moreover, is very competitive from a mere economic standpoint.

Yet another object of the present invention is to provide such a sealing gasket construction which is very reliable and safe in operation and which, moreover, has a very high mechanical strength.

According to one aspect of the present invention, the above mentioned aim and objects, as well as further objects, which will become more apparent hereinafter, are achieved by a sealing gasket construction, characterized in that said sealing gasket construction comprises a contoured body made of a composite material co-extruded with a wire core.

According to an exemplary embodiment of the invention, the sealing gasket construction comprises a composite magnetic contoured or profiled body, co-extruded with a metal wire core including a plurality of thin braided strands, each said strand having a diameter from 0.1 mm to 1.0 mm.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative, but not limitative, example in the accompanying drawings, where:

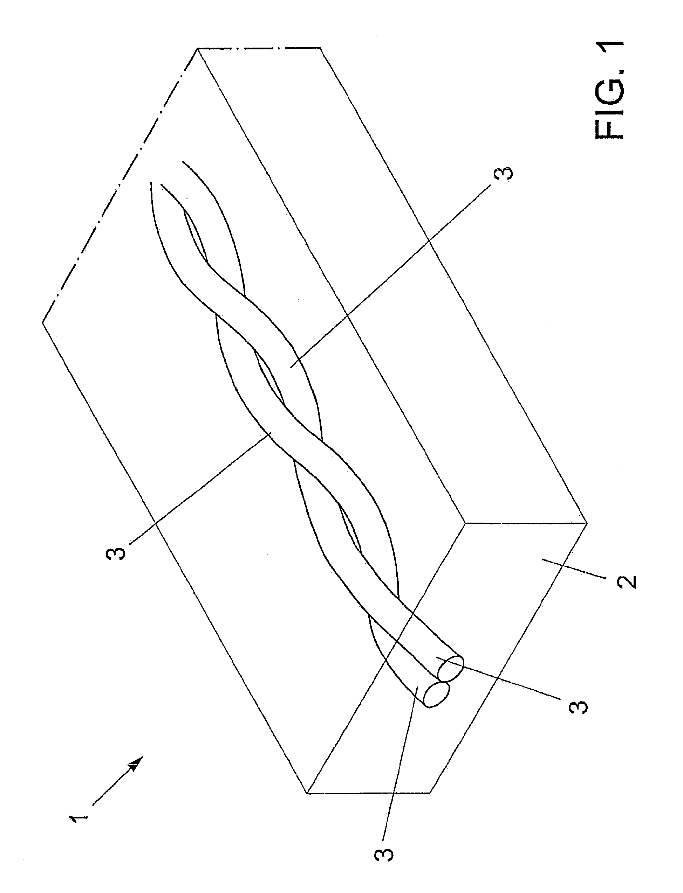

Figure 1 is a partially phantom perspective view showing a length of an exemplary embodiment of the sealing gasket construction according to the present invention;
   and

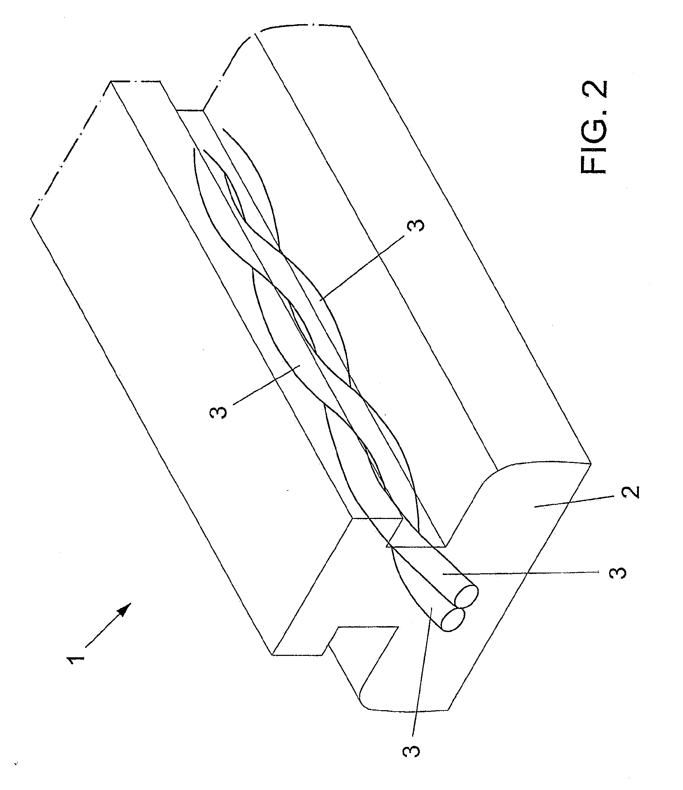

Figure 2 is a partially phantom perspective view of another sealing gasket length according to the present invention.

### DESCRIPTION OF THE PREFERRED EMBODIMENTS

With reference to the number references of the above mentioned figures, the sealing gasket construction according to the present invention, which has been generally indicated by the reference number 1, is made of a composite material including two or more components which are intimately bound to one another owing to specifically designed chemical-physical reactions.

The method adapted to provide the above composite materials advantageously comprises: combinatedly grinding and sinterizing fine powders, a chemical depositing, a vapor depositing, a galvanic depositing, a co-laminating and a co-extruding method.

The materials of said components may have a different nature such as metal or plastics material selected based on their capability of reducing any size or dimensional shrinkage due to the material ageing.

The sealing gasket construction according to the present invention may be either rigid or flexible.

Accordingly to a practical embodiment of the invention, the sealing gasket construction is made by co-extruding a composite profiled element 2 with a metal wire core comprising a plurality of thin braided strands 3.

The body 2 of the profiled element may be a magnetic body.

The metal wire core may comprise a plurality of thin braided strands 3, the diameter of each said strand varying from 0.1 mm to 1.0 mm.

The sealing efficiency of the inventive gasket has been experimentally tested by the following test.

A composite profiled element have been co-extruded with a metal wire core comprising a plurality of thin braided strands.

In the meanwhile, that same profiled member has been co-extruded by a conventional extruding method, without a core.

Some lengths of both the profiled elements, having a length of 2000 mm, have been subjected to a quick ageing test for 20 days with temperature cycles up to 55°C.

At the end of the test, the coreless profiled element lengths were shrunk by about 22 mm, whereas the shrinkage of the inventive metal core profiled element was practically zero.

It has been found that the invention achieves the intended aim and objects.

In fact, the invention has provided a composite material sealing gasket construction which, owing to the provision of the gasket core comprising a plurality of braided wires, has a very small dimensional variation under ageing, and has, moreover, a very high mechanical strength.

The above dimensional stability features, mainly with respect to the magnetic sealing gasket length, and their high mechanical strength, allows the inventive sealing gaskets to be applied to make mosquito curtains, shower cabinets, inner doors, windows and refrigerator components.

In practicing the invention, the used materials, as well as the contingent size, may be any, depending on requirements.

## Claims

1. A sealing gasket construction, **characterized in that** said sealing gasket construction comprises a contoured body made of a composite material co-extruded with a wire core.

2. A sealing gasket construction, according to claim 1, **characterized in that** said composite material is a co-laminated composite material.

3. A sealing gasket construction, according to claim 1, **characterized in that** said composite material is a co-extruded composite material.

4. A sealing gasket construction, according to claim 1, **characterized in that** said composite material is made by combinatedly grinding and sinterizing fine powders.

5. A sealing gasket construction, according to claim 1, **characterized in that** said composite material is a vapor deposited composite material.

6. A sealing gasket construction, according to claim 1, **characterized in that** said composite material is a galvanically deposited composite material.

7. A sealing gasket construction, according to claim 1, **characterized in that** said composite material is a chemically deposited composite material.

8. A sealing gasket construction, according to one or more of the preceding claims, **characterized in that** said core comprises two or more braided thin gauge strands.

9. A sealing gasket construction, according to one or more of the preceding claims, **characterized in that** said sealing gasket construction comprises a contoured or profiled body made of a composite magnetic material.

10. A sealing gasket construction, according to claim 1, **characterized in that** said sealing gasket construction comprises a magnetic contoured or profiled composite element co-extruded with a metal wire core including a plurality of thin gauge braided strands, a diameter of each said strand varying from 0.1 mm to 1.0 mm.
